# EUROPEAN PATENT SPECIFICATION

(11) **EP 3 488 385 B1**
(45) Date of publication and mention of the grant of the patent: **16.08.2023**
(21) Application number: 17826624.3
(22) Date of filing: 04.12.2017
(51) Int. Cl.: G06V 10/25

(54) **METHOD FOR CONVERTING LANDSCAPE VIDEO TO PORTRAIT MOBILE LAYOUT**
VERFAHREN ZUR KONVERTIERUNG VON WEITFORMAT VIDEO IN DAS MOBILE FORMAT
PROCÉDÉ DE CONVERSION DE VIDÉO DE FORMAT LARGE DANS LE FORMAT MOBILE

(30) Priority: 05.12.2016 WO PCT/US2016/065025
(43) Date of publication of application: 29.05.2019
(73) Proprietor: Google LLC, Mountain View, CA 94043 (US)
(72) Inventor: FREY, Nathan, Mountain View, California 94043 (US); PANAGOPOULOS, Alexandros, Mountain View, California 94043 (US)
(74) Representative: Smith, Jeremy Robert
(86) International application number: PCT/US2017/064542
(87) International publication number: WO 2018/106607

(56) References cited:
- FENG LIU ET AL: "Video retargeting: automating pan and scan", ACM MULTIMEDIA 2006 & CO-LOCATED WORKSHOPS : OCTOBER 23 - 27, 2006, SANTA BARBARA, CALIFIRNIA, USA ; MM '06 ; PROCEEDINGS, ACM PRESS, [NEW YORK, NY], 23 October 2006 (2006-10-23), pages 241-250, XP002605061, DOI: ACM.ORG/10.1145/1180639.1180702 ISBN: 978-1-59593-447-5
- XIN FAN ET AL: "Looking into video frames on small displays", PROCEEDINGS OF THE 11TH. ACM INTERNATIONAL CONFERENCE ON MULTIMEDIA. MM'03. BERKELEY, CA, NOV. 2 - 8, 2003; [ACM INTERNATIONAL MULTIMEDIA CONFERENCE], NEW YORK, NY : ACM, US, 2 November 2003 (2003-11-02), pages 247-250, XP058170090, DOI: 10.1145/957013.957063 ISBN: 978-1-58113-722-4 & CHEN L-Q ET AL: "A VISUAL ATTENTION MODEL FOR ADAPTING IMAGES ON SMALL DISPLAYS", MULTIMEDIA SYSTEMS, ACM, NEW YORK, NY, US, vol. 9, no. 4, 1 October 2003 (2003-10-01) , pages 353-364, XP001196335, ISSN: 0942-4962, DOI: 10.1007/S00530-003-0105-4

## Description

### BACKGROUND

In a networked environment, such as the Internet or other networks, first-party content providers can provide information for public presentation on resources, such as webpages, documents, applications, and/or other resources. The first-party content may include text, video, and/or audio information provided by the first-party content providers via a resource server for presentation on a client device over the Internet. Videos and similar media recorded in a wide aspect ratio that may be designed to be viewed on a desktop or in a landscape orientation, cannot directly fit full screen onto a mobile device held in vertical or portrait orientation, and typically are either cropped to the center, losing detail at the left and right edges of the video, or are surrounded with black bars at the top and bottom, reducing the display size of the video. Vertical orientation media is a popular format for viewing and displaying media in many applications. Since many videos and other media are recorded only in a wide aspect ratio layout, there is a large amount of inventory for this layout while demand for publishers is increasingly needed for portrait layouts. Document D 1 (Video retargeting: automating pan and scan by Feng Liu) describes in its abstract Video Retargeting that adapts video to better suit the target display, minimizing the important information lost. A framework is defined that measures the preservation of the source material, and methods for estimating the important information in the video. Video retargeting crops each frame and scales it to fit the target display. An optimization process minimizes information loss by balancing the loss of detail due to scaling with the loss of content and composition due ot cropping. The cropping window can be moved during a shot to introduce virtual pans and cuts, subject to constraints that ensure cinematic plausibility.

### SUMMARY

One implementation relates to a method for cropping media for a particular orientation using a computing device. The method may comprise receiving by a video preprocessor of the device, a first frame of media (e.g. a video) in a first orientation. A first region comprising a first feature within the first frame may be identified, by an image analyzer. A cropping calculator of the device may generate a score for the first region based on a characteristic of the first feature and determine that the score for the first region exceeds a threshold. An image processor of the device may then crop the first frame of the video, responsive to the determination that the score for the first region exceeds the threshold, to include the first region within a predetermined display area comprising a subset of the first frame in a second orientation.

In some implementations, cropping media may also include padding one or more edges of the media content to extend the original content. In some implementations, the media is a video and padding comprises extending the original scene content in the video frame. Extending the original scene content may comprise extending the background color in order to pad the video frame with the background color.

The first feature may comprise text. Generating the score for the first region based on a characteristic of the first feature may further comprise generating the score, by the cropping calculator, proportional to a size of the text. Additionally or alternatively, generating the score for the first region based on a characteristic of the first feature may further comprise generating the score, by the cropping calculator, inversely proportional to a distance of the text from a center of the frame.

The first feature may comprise a face. Generating the score for the first region based on a characteristic of the first feature may further comprise generating the score, by the cropping calculator, based on the size of the face relative to the frame.

The method further comprises: identifying, by the image analyzer, a second region within the first frame comprising a second feature, generating a second score, by the cropping calculator, for the second region, determining, by the cropping calculator, that the second score is less than the threshold, and responsive to the determination, cropping, by the image processor, the second region from the first frame.

The method further comprises: identifying, by the image analyzer, a second region within the first frame comprising a second feature, generating a second score, by the cropping calculator, for the second region, determining, by the cropping calculator, that the second score exceeds the threshold; and wherein cropping the first frame may further comprise: identifying, by the image analyzer, a display region in the second orientation comprising the first region and the second region, responsive to the determination that the score for the first region and the second score for the second region each exceed the threshold, and cropping the first frame, by the image processor, to the boundaries of the identified display region.

Identifying the display region in the second orientation comprising the first region and the second region comprises: determining, by the cropping calculator, that the score for the first region is higher than the second score for the second region; generating, by the image processor, an intermediate display region centered on the first feature in the second orientation having a predetermined size; and adjusting, by the image processor, a position of the intermediate display region within the frame to include the first region and second region while maintaining the predetermined size and second orientation.

The method may further comprise: receiving, by the video preprocessor, a second frame of the video in the first orientation; identifying, by the image analyzer, a second position in the second frame for the first region comprising the first feature; and generating a second score, by the cropping calculator, for the first region based on an amount of movement of the first region between the first frame and second frame; and wherein determining that the score for the first region exceeds a threshold may further comprise adding the score for the first region and the second score for the first region.

The method may further comprise identifying, by a temporal image processor, a global motion vector from a difference in pixels of the first frame and pixels of the second frame; and
wherein generating the second score comprises generating a score, by the cropping calculator, proportional to a difference between the movement of the first region between the first frame and second frame and the global motion vector.

Another implementation relates to a system for cropping media for a particular orientation using a computing device. The system comprises one or more of one or more processors of a device, a network interface electrically connected to the one or more processors, and a computer storage device electrically connected to the one or more processors storing instructions. The instructions, when executed by the one or more processors, causes the one or more processors to perform operations comprising the above method.

Yet a further implementation relates to a computer readable storage device storing instructions that, when executed by one or more processors, cause the one or more processors to perform several operations. The operations may include operations comprising the above method.

Accordingly, disclosed herein are systems and methods for intelligent or "smart" cropping to convert between landscape and portrait images and video by identifying regions of interest in the video. Various metrics may be used to identify regions of interest, including facial recognition, text identification or optical character recognition, object detection, motion analysis, identifications of static regions in the images such as borders or banners, and entropy analysis. Aspects and implementations provide improved generation of video that is adapted for display on a device.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
FIG. 1 is a block diagram depicting an implementation of an environment for automatic conversion of media from one orientation to another.
FIG. 2 is a figure depicting cropping a single frame of media in an implementation of a use case.
FIG. 3 is a block diagram depicting an implementation of software and/or hardware modules configured for media pre-processing, media analysis, and cropping of received media.
FIG. 4 is a flow diagram depicting an implementation of a method of cropping a frame of media.
FIG. 5 is a flow diagram depicting an implementation of a method of cropping a frame of media by determining a score for each of a plurality of regions.
FIG. 6 is a flow diagram depicting an implementation of a method of generating or updating a score based on movement of a feature.
FIG. 7 is a flow diagram depicting an implementation of a method of cropping a frame of media using received metadata.
FIG. 8 is a flow diagram depicting an implementation of a method of adjusting cropping based on a change in orientation.
FIG. 9 is a block diagram depicting a general architecture for a computing system that may be employed to implement various elements of the systems and methods described and illustrated herein.

It will be recognized that some or all of the figures are schematic representations for purposes of illustration. The figures are provided for the purpose of illustrating one or more implementations with the explicit understanding that they will not be used to limit the scope or the meaning of the claims.

### DETAILED DESCRIPTION

Following below are more detailed descriptions of various concepts related to, and implementations of, methods, apparatuses, and systems for providing information on a computer network. The various concepts introduced above and discussed in greater detail below may be implemented in any of numerous ways as the described concepts are not limited to any particular manner of implementation. Various implementations and applications are provided primarily for illustrative purposes.

"Dumb" cropping to the center of an image or video relies on an assumption that the most important content of the video or image occurs in the center of the image. This may be incorrect as important content may be off-center, such as text at the bottom of a screen or a person at a "one-third" position horizontally in the frame. A video showing a person entering a room may include the person entering from one side of the frame, while the remainder of the frame is static, or a video with two people talking may place each at the sides of the frame with empty space between them. Applying center cropping in such instances may result in an empty room or empty space, potentially confusing and frustrating the viewer.

Accordingly, disclosed herein are systems and methods for intelligent or "smart" cropping to automatically convert a video or image in landscape mode to fit in portrait mode, or vice versa, while remaining in full screen without merely applying "dumb" or center cropping or adding padding to the top/bottom. Conversion can include detection of parts of the image or video (e.g., features) for each frame that are important. Based on the identified important areas, the image or video may be intelligently cropped or padded to retain important features while discarding unimportant regions, static borders, etc. Features detected may include face tracking, object detection and/or recognition, text detection, detection of dominant colors, motion analysis, scene change detection, and image saliency. Detection and recognition can use methods and algorithms that are deep learning based. Text detection may use optical character recognition (OCR). Detection of features allows for an optimal cropping path. Other aspects of the invention may include padding the image to match the background color and removing and/or reformatting any borders to fit the new display mode. Although primarily discussed in terms of video, in many implementations the systems may be applied to individual images or frames.

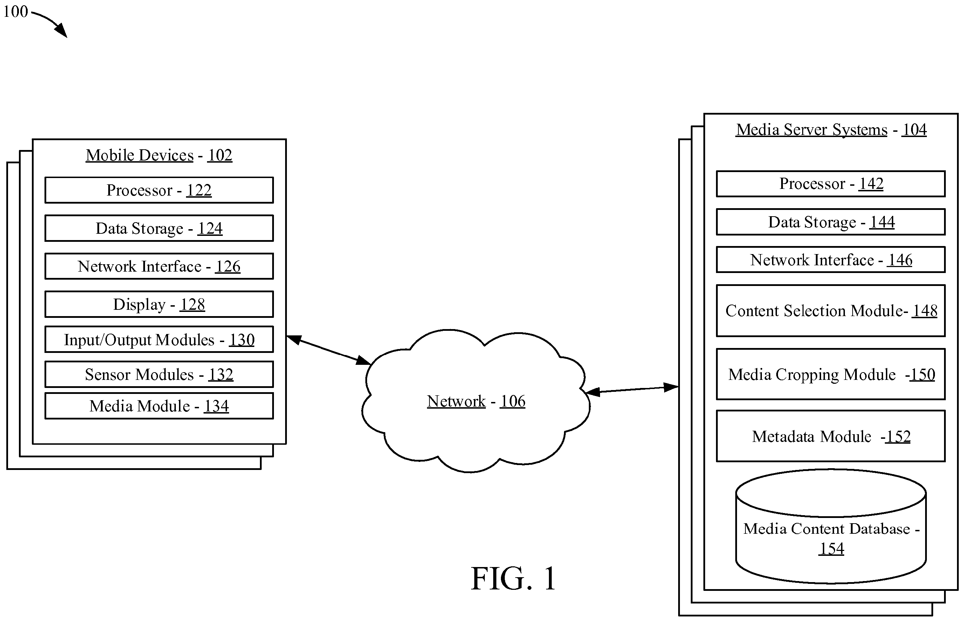

FIG. 1 is a block diagram of an implementation of an environment 100 for automatic conversion of video from one orientation to another over a network 106. The network 106 may include a local area network (LAN), wide area network (WAN), a telephone network, such as the Public Switched Telephone Network (PSTN), a wireless link, an intranet, the Internet, or combinations thereof. The environment 100 also includes mobile devices 102. In some implementations, mobile devices 102 include a processor 122, data storage 124, a network interface 126, a display 128, input/output modules 130, sensor modules 132, and media modules 134. Sensor module 132 may be configured to contain sensors to detect orientation of computing devices (e.g., an accelerometer and/or magnetometer) and other similar sensors contained in many mobile devices. The processor 122 may include a microprocessor, an application-specific integrated circuit (ASIC), a field-programmable gate array (FPGA), etc., or combinations thereof. The data storage 124 may include, but is not limited to, electronic, optical, magnetic, or any other storage or transmission device capable of providing processor with program instructions. The memory may include a floppy disk, compact disc read-only memory (CD-ROM), digital versatile disc (DVD), magnetic disk, memory chip, read-only memory (ROM), random-access memory (RAM), Electrically Erasable Programmable Read-Only Memory (EEPROM), erasable programmable read only memory (EPROM), flash memory, optical media, or any other suitable memory from which processor 122 can read instructions. The instructions may include code from any suitable computer programming language such as, but not limited to, C, C++, C#, Java^{®}, JavaScript^{®}, Perl^{®}, HTML, XML, Python^{®}, and Visual Basic^{®}.

The mobile device 102 can include one or more devices such as a computer, laptop, smart phone, tablet, personal digital assistant configured to communicate with other devices via the network 106. The device may be any form of portable electronic device that includes a data processor and a memory. The data storage 124 may store machine instructions that, when executed by a processor, cause the processor to perform one or more of the operations described herein. The data storage 124 may also store data to effect presentation of one or more resources, content items, etc. on the computing device. The processor may include a microprocessor, an application-specific integrated circuit (ASIC), a field-programmable gate array (FPGA), etc., or combinations thereof. The data storage 124 may include, but is not limited to, electronic, optical, magnetic, or any other storage or transmission device capable of providing processor with program instructions. The data storage 124 may include a floppy disk, compact disc read-only memory (CD-ROM), digital versatile disc (DVD), magnetic disk, memory chip, read-only memory (ROM), random-access memory (RAM), Electrically Erasable Programmable Read-Only Memory (EEPROM), erasable programmable read only memory (EPROM), flash memory, optical media, or any other suitable memory from which processor can read instructions. The instructions may include code from any suitable computer programming language such as, but not limited to, ActionScript^{®}, C, C++, C#, HTML, Java^{®}, JavaScript^{®}, Perl^{®}, Python^{®}, Visual Basic^{®}, and XML.

The mobile device 102 can execute a software application (e.g., a web browser or other application) to retrieve content from other computing devices over network 106. Such an application may be configured to retrieve first-party content from a media server system 104. In some cases, an application running on the mobile device 102 may itself be first-party content (e.g., a game, a media player, etc.). In one implementation, the mobile device 102 may execute a web browser application which provides a browser window on a display of the client device. The web browser application that provides the browser window may operate by receiving input of a uniform resource locator (URL), such as a web address, from an input device (e.g., a pointing device, a keyboard, a touch screen, or another form of input device). In response, one or more processors of the client device executing the instructions from the web browser application may request data from another device connected to the network 106 referred to by the URL address (e.g., a media server system 104). The other device may then provide web page data and/or other data to the mobile device 102, which causes visual indicia to be displayed by the display of the mobile device 102. Accordingly, the browser window displays the retrieved first-party content, such as web pages from various websites, to facilitate user interaction with the first-party content.

In some implementations, the media module 134 of the mobile devices 102 is configured to receive a plurality of frames of media and associated metadata. The media may be received over a network interface 126 and stored in data storage 124. In some implementations, the frame of media is received as part of streaming media data. The streaming media may be received over the network interface 146. In some implementations, the media module 134 is configured to identify region in the frame, based on the received metadata. In some implementations, the media module 134 is configured to crop the frame of media based on the region. In some implementations, the cropped area is further based on one or more of frames of media preceding and/or following the frame of media.

In some implementations, the media module 134 of the mobile devices 102 is configured to receive an indication of a change in orientation from one or more sensor modules 132. In some implementations, the media module 134 is configured to dynamically adjust the cropping of playing media based on a change in orientation.

The media server system 104 can include a processor 142, data storage 144, a network interface 146, a content selection module 148, a media cropping module 150, a metadata module 152, and a media content database 154. In some implementations, the content selection module 148 of the media server system 104 is configured to select media from the media content database 154. In some implementations, the media cropping module 150 is configured to pre-process media, analyze the media for features and/or objects, and crop the media based on the analysis of the features and/or objects. In some implementations, the metadata module 152 is configured to extract data based on pre-processing media, analyzing the media for features and/or objects, and determination of a cropping path for a target aspect ratio or resolution. Although shown on media server system 104, in many implementations, media cropping module 150 may be executed on one or more mobile devices 102.

The media server system is shown to include a media cropping module 150. In some implementations, the media cropping module 150 is configured to pre-process media, analyze the media for features and/or objects, and crop the media based on the analysis of the features and/or objects. In some implementations, the media cropping module 150 is configured to determine if cropping is needed based on if one or more values of a target aspect ratio is smaller than the current values of the aspect ratio of the frames of media being analyzed. In some implementations, the media cropping module 150 is configured to only crop the frames of the media if one or more values of a target resolution is smaller than the current values of the resolution of the frame of media. In some implementations, the media cropping module 150 is configured to crop the media to match a target aspect ratio or to match a target resolution. The media cropping module 150 may be configured to add additional padding to one or more sides of the cropped frame of media to match the target aspect ratio or to match the target resolution. In some implementations, the media cropping module 150 may be configured to further base the cropped area on one or more of frames of the media preceding and/or following the current frame of media being cropped. In some implementations, the media cropping module 150 is configured to include one or more regions that exceeds a threshold. In some implementations, the media cropping module 150 is configured to at least include one or more regions of a plurality of regions with scores that exceed a threshold value are considered when the media cropping module 150 is determining the region to include when cropping the frame of media.

In some implementations, the metadata module 152 is configured to extract data based on pre-processing media, analyzing the media for features and/or objects, and determination of a cropping path for a target aspect ratio or resolution. In some implementations, the metadata module 152 is configured to receive the metadata as part of the media file containing a plurality of frames of media. In some implementations, the metadata module 152 is configured to receive the metadata independently, along with an identifier or other data associating the metadata with the received plurality of frames of media. In some implementations, the metadata module 152 is configured to analyze the metadata to determine the portion s of data related to regions associated with one or more of the frames of media associated with the media. In some implementations, the metadata module 152 is configured to extract bounding information of one or more regions for each of the plurality of frames of the media included in the metadata. In some implementations, the metadata module 152 is configured to extract locations within each of the plurality of frames of the media of one or more features. Features may include objects such as automobiles, buildings, people, animals, street signs, and the like, text, borders of the frame of media, uniform color padding of one or more sides of the frame of media, etc. In some implementations, the metadata module 152 is configured to identify a plurality of features and/or regions of one or more of the plurality of frames of the media. In some implementations, the metadata module 152 is configured to associate the received metadata with a target aspect ratio or a target resolution.

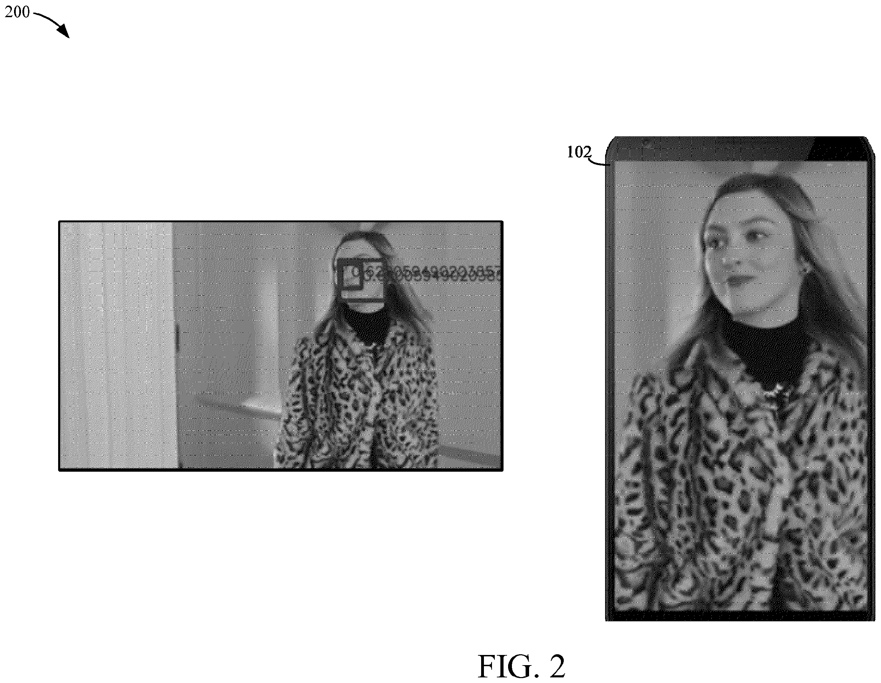

FIG. 2 depicts cropping a single frame of media in an implementation of a use case. The input image 202 is shown in a horizontal or landscape orientation. Once the input image 202 is processed to detect the important objects and/or features of the input image 202, the regions containing the important objects and/or features are retained to the extent possible when generating output image 204. In FIG.2, output image 204 is shown in a vertical or portrait orientation displayed on a mobile device 102. In this depiction of an implementation of the use case, facial features are identified in the input image 202 and the region comprising the facial features is retained in the output image 204 displayed on the mobile device 102.

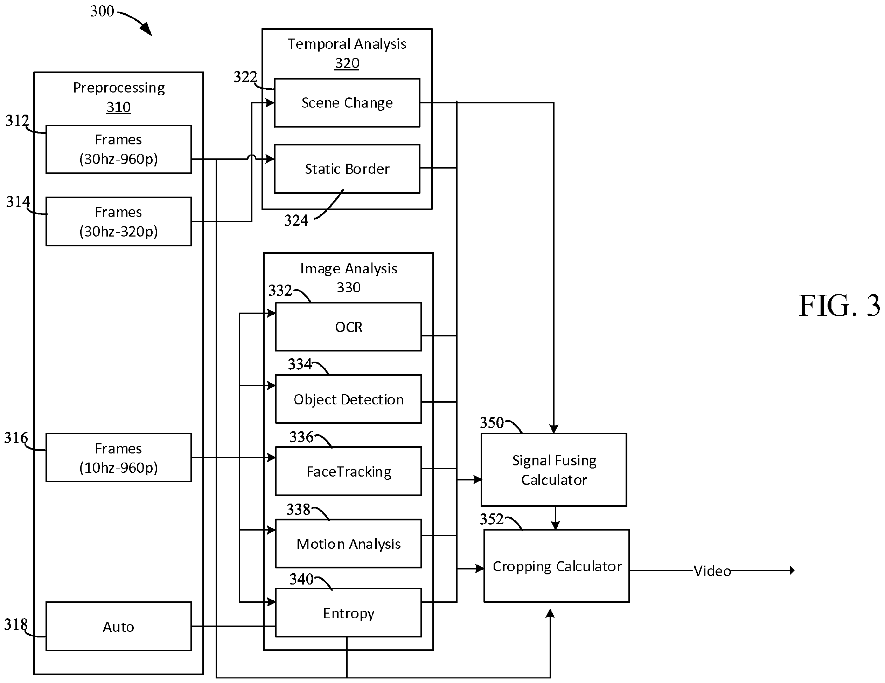

FIG. 3 is a block diagram of an implementation of software and/or hardware modules for media pre-processing, media analysis, and cropping of received media. In some implementations, the preprocessing module 310 is configured to preprocess the media and down convert the media using down convert module 312, down convert module 314, down convert module 316, down convert module 318, and the like. In some implementation, the preprocessing module 310 is configured to send the resulting output to one or more of a temporal analysis 320 module and an image analysis 330 module. The temporal analysis 320 module may comprise a scene change 322 module and a static border 324 module. The image analysis 330 module may comprise an OCR 332 module, object detection 334 module, face-tracking 336 module, motion analysis 338 module, and entropy 345 module. The temporal analysis 320 module and image analysis 330 module may be configured to send their data results to a signal fusing calculator 350 and a cropping calculator 352. Although shown separately, in many implementations, temporal analysis and image analysis modules may be part of the same analyzer system or module. Similarly, components illustrated within temporal analysis and image analysis modules may be separate from the temporal analysis or image analysis module, or may be provided by other modules. In some implementations, the image analysis 330 module is configured to encompass a deep learning inference model that may be trained using input data. In some implementations, the input data may be input based on marked or selected regions.

In some implementations, a temporal analysis 320 module may comprise an application, applet, service, server, daemon, routine, or other executable logic for performing analysis on a sequence of images, such as images of a video. Temporal analysis 320 module may comprise a scene change 322 module that is configured to analyze a plurality of frames of media to determine scene changes. Scene change 322 module may comprise an application, applet, service, server, daemon, routine, or other executable logic for identifying differences between consecutive images that indicate a scene change or significant break in a video. In some implementations, the scene change 322 module is configured to determine scene changes by using key point detection to analyze when there is a large change in the key points indicating a scene break or a change in scene. In some implementations, the scene change 322 module is configured to compare all pixels in one frame to the pixels in a successive frame and if more than a certain threshold of pixels are different when considered as part of an optical flow, it is an indication of a scene change. In some implementations, the scene change 322 module is configured to calculate a motion vector between a plurality of frames of media and a lack of a coherent motion vector between successive frames indicates a scene change. Features may then be identified within a particular scene and the regions containing the particular features tracked among the plurality of frames of media within a particular scene. In some implementations, the scene change 322 module is configured to track the information of where the particular features are within the plurality of frames of media and such information is also used to determine where to crop the frame of media based on the region.

In some implementations, a temporal analysis 320 module comprises a static border 324 module that is configured to analyze a plurality of frames of media to determine whether and where there are static borders. Static border 324 module may comprise an application, applet, service, server, daemon, routine, or other executable logic for identifying static borders remaining substantially unchanged between consecutive images indicating a border on at least one edge of the frame. In some implementations, the static border 324 module is configured to receive a plurality of frames of media and configured to analyze the plurality of frames of media to look for static borders along the edges of the plurality of frames. In some implementations, the static border 324 module is configured to locate borders by selecting one or more random pixels and compare lines of pixels vertically and/or horizontally to the random pixels to determine if there are unbroken lines of pixels that are close in color to the randomly selected pixels. Such lines of pixels may extend across the entire image, in some implementations, or a part of the image (e.g. quarter of the image). In some implementations, the static border 324 module is configured to locate borders that are static from one frame to the next and contain pixels that are relatively uniform in color. In some implementations, the static border 324 module is configured to locate borders that are static from one frame to the next and contain pixels that are relatively uniform in color, but also contain some additional static information such as text embedded in the border that is of a different color. Once a border is located, whether or not it contains embedded text, it can be treated during the processing of the cropping as an image.

In some implementations, the image analysis 330 module comprises an optical character recognition, OCR 332 module that is configured to detect text embedded in image data. The image data may be one or more frames of media such as video. OCR 332 module may comprise an application, applet, service, server, daemon, routine, or other executable logic for identifying text embedded in the image data of the one or more frames of media. In some implementations, OCR 332 module may compare predetermined vectors or bitmap images corresponding to letters to a portion of an image, such as via a sliding window. In some implementations, OCR 332 module may select reference images (e.g. letters) based on previous letters (e.g. according to a text prediction system), which may improve efficiency.

In some implementations, the image analysis 330 module comprises an object detection 334 module that is configured to use a neural network trained on different objects, such as via tens, hundreds, or thousands of reference images of objects. Object detection 334 module may comprise an application, applet, service, server, daemon, routine, or other executable logic for identifying visual objects (i.e., data that when displayed creates a visual representation of an object) in one or more frames of media. The object detection 334 module may be configured to detect objects such as automobiles, buildings, people, animals, street signs, and the like, text, borders of the frame of media, uniform color padding of one or more sides of the frame of media, etc. The neural network may identify similar elements in images of an object and create a categorization of elements representative of an object that may then be used to identify objects in new images. The image analysis 330 module may generate bounding boxes surrounding identified objects, such that the bounding boxes may be tracked from image to image.

In some implementations, the image analysis 330 module comprises a face-tracking 336 module that is configured to receive a plurality of frames of media and analyze the plurality of frames of media to detect facial features, e.g., via eigenfaces or similar structures. Face-tracking 336 module may comprise an application, applet, service, server, daemon, routine, or other executable logic for identifying similarities between one or more consecutive frames of a media that upon display create a visual representation of one or more faces and the relative motion of the one or more faces. Face tracking may then be implemented by tracking the facial features to matching facial features in each of the plurality of frames of media.

In some implementations, the image analysis 330 module comprises a motion analysis 338 module that is configured to analyze the motion of objects detected in a plurality of frames of media and to calculate a motion vector between the plurality of frames of media. Motion analysis 338 module may comprise an application, applet, service, server, daemon, routine, or other executable logic for identifying similarities between one or more consecutive frames of a media that upon display create a visual representation of one or more objects and the relative motion of the one or more objects. In some implementations, the motion analysis 338 module as configured to calculate a global motion vector from a difference in pixels in a region of a first frame of media to the pixels of a second frame of the media.

In some implementations, the image analysis 330 module comprises an entropy 340 module that is configured to analyze the entropy of each frame in a plurality of frames of media and to calculate a difference in entropy (i.e, a measure of the amount of change or difference that has occurred from one frame to another) to determine key frames. Entropy 340 module may comprise an application, applet, service, server, daemon, routine, or other executable logic for analyzing the entropy of one or more frames of media. In some implementations, the entropy 340 module is configured to analyze entropy between identified regions of frames of media to calculate a difference in entropy to determine key regions. In some implementations, the entropy 340 module is configured to extract values from the plurality of frames of media that characterizes the randomness of motion vectors associated with regions in the frames allowing the plurality of frames of media to segmented into distinct events (e.g., scene changes in a video).

In some implementations, the signal fusing calculator 350 module is configured to merge the data from the temporal analysis 320 module and the image analysis 330 modules and determine the important objects and/or features of an entire scene comprising a plurality of frames of media. The merged data may then be used by the cropping calculator 352 module to crop the plurality of frames of media to regenerate the media. In some implementations, the media is regenerated to a video in the target aspect ratio. In some implementations, the signal fusing calculator 350 module is configured to assign weights to the different outputs of the analyzers. The signal fusing calculator 350 module may normalize the different outputs through a specified range to values that have been determined by a deep learning method.

### Methods of Automatically Cropping Media

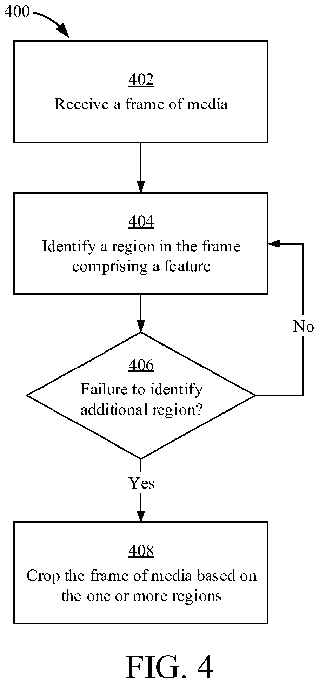

FIG. 4 is a flow diagram of an implementation of a method 400 of cropping a frame of media. In some implementations, method 400 is implemented by a processor 142 of a media server system 104 executing instructions stored on data storage 144 and may use media extracted from a media content database 154. In brief, the method 400 comprises receiving a frame of media at 402 and identifying a region in the frame comprising a feature at 404. If an additional region is identified at 406, the method returns to identifying a region in the frame comprising a feature at 404. If there is a failure to identify a region at 406, the method continues cropping the frame of media based on the one or more regions identified at 408.

Still referring to FIG. 4 and in more detail, method 400 begins when a frame of media is received at 402. In some implementations, the media is a media file containing a plurality of frames of media (e.g., a video file). The media may be stored in a media content database 154 or retrieved over a network interface 146. In some implementations, the frame of media is received as part of streaming media data. The streaming media may be received over the network interface 146. In some implementations, the frame of media is part of a list of stored media and each media is taken in turn to be processed. In some implementations, a determination is first made whether the media needs to be cropped and/or processed. The determination may be done by comparing the stored dimensions, aspect ratio, resolution, etc. of the stored media with the target values.

A region in the frame comprising a feature is identified at 404. In some implementations, the feature is identified by analyzing the frame using facial recognition. In some implementations, the feature is identified by analyzing the frame for text using optical character recognition. In some implementations, the feature is identified by analyzing the frame for objects (e.g., automobiles, buildings, people, animals, street signs, and the like), using object recognition. In some implementations, the feature is identified by analyzing the frame for borders, frames, and/or padding (e.g., a border of uniform or near uniform color at one or more edges of the frame). In some implementations, the frame is analyzed to identify a plurality of features. The features may be of different types (e.g., faces, text, objects, etc.). If there is not a failure to identify an additional region at 406, the method returns to identifying an additional region in the frame comprising a feature at 404.

If there is a failure to identify an additional region at 406, the frame of media is cropped based on the one or more regions at 408. In some implementations, the frame of media is only cropped if one or more values of a target aspect ratio is smaller than the current values of the aspect ratio of the frame of media. In some implementations, the frame of media is only cropped if one or more values of a target resolution is smaller than the current values of the resolution of the frame of media. In some implementations, the frame of media is cropped to match a target aspect ratio or to match a target resolution. Additional padding may be added to one or more sides of the cropped frame of media to match the target aspect ratio or to match the target resolution. In some implementations, the cropped area is further based on one or more of frames of media preceding and/or following the frame of media.

In some implementations, some padding may be added to meet the target aspect ratio during cropping. In some implementations, if there are static borders on one or edges of the frame of media they can be moved or reformatted to form and/or be a part of the padding.

In some implementations, a plurality of frames of media are received and the plurality of frames of media are analyzed to determine scene changes. Key point detection may be used to analyze when there is a large change in the key points indicating a scene break or a change in scene. In some implementations, a comparison of all pixels in one frame is compared to the pixels in a successive frame and if more than a certain threshold of pixels are different when considered as part of an optical flow, it is an indication of a scene change. In some implementations, a motion vector is calculated between a plurality of frames of media and a lack of a coherent motion vector between successive frames indicates a scene change. Features may then be identified within a particular scene and the regions containing the particular features tracked among the plurality of frames of media within a particular scene. In implementations, the information of where the particular features are tracked within the plurality of frames of media is also used to determine where to crop the frame of media based on the region.

In some implementations, a plurality of frames of media are received and the plurality of frames of media are analyzed to identify facial features. Face tracking may then be implemented by tracking the facial features to matching facial features in each of the plurality of frames of media.

In some implementations, a plurality of frames of media are received and the plurality of frames of media are analyzed to look for static borders along the edges of the plurality of frames. In some implementations, to locate borders, random pixels are selected and lines of pixels vertically and/or horizontally are compared to the random pixels to determine if there are unbroken lines of pixels that are close in color to the randomly selected pixels. In some implementations, borders are located that are static from one frame to the next and contain pixels that are relatively uniform in color. In some implementations, borders can be located that are static from one frame to the next and contain pixel that are relatively uniform in color, but also contain some additional static information such as text embedded in the border that is of a different color. Once a border is located, whether or not it contains embedded text, it can be treated during the processing of the cropping as an image.

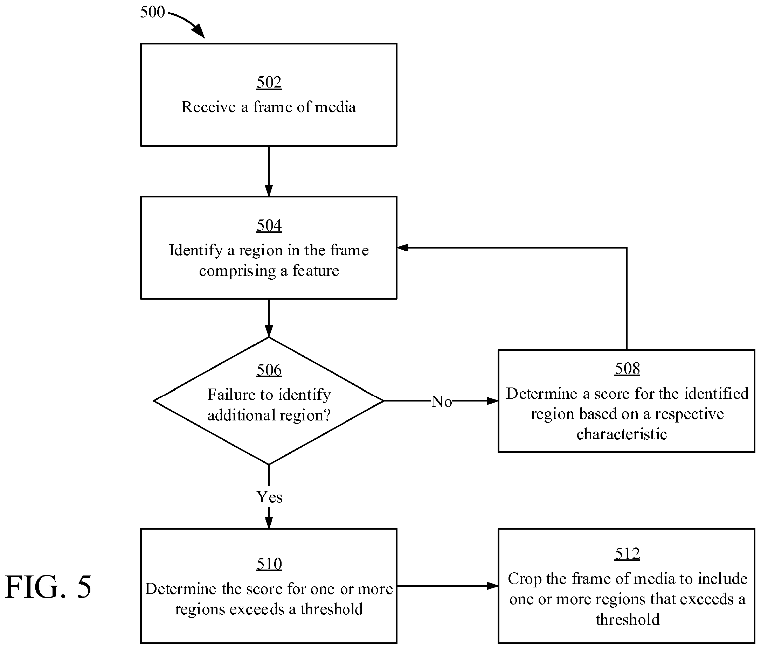

FIG. 5 is a flow diagram of an implementation of a method 500 of cropping a frame of media by determining a score for each of a plurality of regions. In some implementations, method 400 is implemented by a processor 142 of a media server system 104 executing instructions stored on data storage 144 and may use media extracted from a media content database 154. In brief, the method 500 comprises receiving a frame of media at 502 and identifying a region in the frame comprising a feature at 504. If an additional region is identified at 506, the method determines a score for the identified region based on a respective characteristic at 508 and returns to identifying a region in the frame comprising a feature at 504. If there is a failure to identify a region at 506, the method continues by determining the score for one or more of the identified regions exceeds a threshold at 510, and cropping the frame of media to include one or more regions that exceeds a threshold at 512.

Still referring to FIG. 5 and in more detail, the method 500 begins when a frame of media is received at 502. In some implementations, the media is a media file containing a plurality of frames of media (e.g., a video file). The media may be stored in a media content database 154 or retrieved over a network interface 146. In some implementations, the frame of media is received as part of streaming media data. The streaming media may be received over the network interface 146.

A region in the frame, comprising a feature, is identified at 504. In some implementations, one or more of the features in the region are identified by analyzing the frame using facial recognition. In some implementations, one or more of the features in the region are identified by analyzing the frame for text using optical character recognition. In some implementations, one or more of the features in the region are identified by analyzing the frame for objects (e.g., automobiles, buildings, people, animals, street signs, and the like), using object recognition. In some implementations, one or more of the features in the region are identified by analyzing the frame for borders, frames, and/or padding (e.g., a border of uniform or near uniform color at one or more edges of the frame). In some implementations, each region is further analyzed to potentially identify a plurality of features in one or more of the regions. The features in each of the plurality of regions may be of different types (e.g., faces, text, objects, etc.). If there is not a failure to identify an additional region at 506, the method determines a score for the identified region based on a respective characteristic at 508 and returns to identifying an additional region in the frame comprising a feature at 504.

A score for the identified regions, based on a respective characteristic, is determined at 508. In some implementations, the scores are based on the type of feature that is located in the region or at least partially in the region. In some implementations, the scores are weighted based on the type of feature that is located in the region. The weighting may be determined through the use of training data. In some implementations, the training data may be used as an input to a deep learning inference model. In some implementations, the training data is data input based on the selection of important regions of media. Some characteristics the score may be based on may include size of the feature in the region, type of feature in the region, motion of feature in the region, relative motion of the feature in the region, an amount of blurriness associated with the region, an amount of blurriness associated with a feature in the region, and the like. In some implementations, the scores are assigned to the features instead of the regions containing the features. In some implementations, determining a score for each of the plurality of regions comprises determining a ranking of the plurality of regions with at least determining a top ranked region of the plurality of regions. In some implementations, determining a score for each of the plurality of regions comprises ranking each of the plurality of regions from highest to lowest, where the higher ranked regions are more likely to be included in any cropping of the frame of media.

If there is a failure to identify an additional region at 506, the method determines the score for one or more regions exceeds a threshold at 510. In some implementations, the scores for each of the plurality of regions comprise values for comparison. In some implementations, the score for a region must exceed a threshold value before the region is taken into consideration when cropping the frame of media. In some implementations, only the region with the highest score is prioritized to be included when cropping the frame of media. In some implementations, a plurality of regions is prioritized based on their respective scores to be included when cropping the frame of media. In some implementations, a determination is made for which combination of regions results in a maximized score where all regions are able to fit inside the area of the cropped frame of media.

If there is not a failure to identify an additional region at 506, the frame of media is cropped at 512 to include one or more regions with an associated score that exceeds a threshold. In some implementations, a determination only the regions of the plurality of regions with scores that exceed a threshold value are considered when determining the region to include when cropping the frame of media. In some implementations, the frame of media is only cropped if one or more values of a target aspect ratio is smaller than the current values of the aspect ratio of the frame of media. In some implementations, the frame of media is only cropped if one or more values of a target resolution is smaller than the current values of the resolution of the frame of media. In some implementations, the frame of media is cropped to match a target aspect ratio or to match a target resolution. Additional padding may be added to one or more sides of the cropped frame of media to match the target aspect ratio or to match the target resolution. In some implementations, the cropped area is further based on one or more of frames of media preceding and/or following the frame of media.

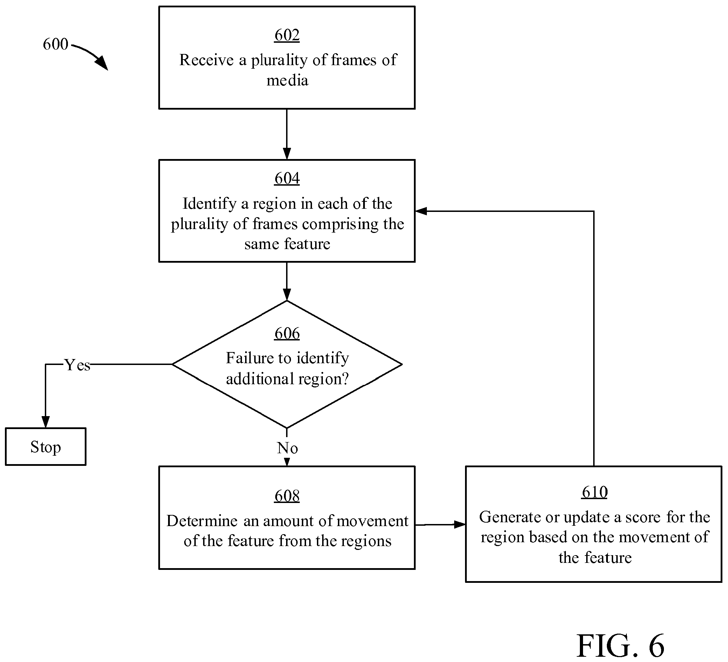

FIG. 6 is a flow diagram of an implementation of a method 600 of generating or updating a score based on movement of a feature. In some implementations, method 600 is implemented by a processor 142 of a media server system 104 executing instructions stored on data storage 144 and may use media extracted from a media content database 154. In brief, the method 600 comprises receiving a plurality of frames of media at 602 and identifying a region in each of the plurality of frames comprising the same feature at 604. If there is not a failure to identify additional regions at 606, the method continues by determining an amount of movement of the feature from the regions at 608, and generating or updating a score for the region based on the movement of the feature at 610 before returning to 604 to identify an additional region in each of the plurality of frames comprising the same feature. If there is a failure to identify additional regions at 606, the method stops.

Still referring to FIG. 6 and in more detail, the method 600 begins when a plurality of frames of media is received at 602. In some implementations, the media is a media file containing the plurality of frames of media (e.g., a video file). The media may be stored in a media content database 154 or retrieved over a network interface 146. In some implementations, the plurality of frames of media are received as part of streaming media data. The streaming media may be received over the network interface 146.

A region in each of the plurality of frames comprising the same feature is identified at 604. In some implementations, identification of the feature as the same feature comprises comparing characteristics of the feature. Characteristics of the feature may include object attributes, color values, size, and the like. In some implementations, identification of the feature as the same feature is also based on proximity of the region bounding the feature between frames of the plurality of frames preceding and following the frame.

If there is not a failure to identify additional regions at 606, an amount of movement of the feature from the regions is determined at 608. In some implementations, the amount of movement of the feature from the regions is determined by the absolute position of the feature within each of the plurality of frames. In some implementations, the amount of movement of the feature from the regions is determined by the relative position of the feature within each of the plurality of frames when compared to one or more of preceding or following frames. In some implementations, the amount of movement is determined by an increase or decrease in size of the feature between one or more of the plurality of frames. A combination of different ways of determining the amount of movement of the feature may be used to determine the amount of movement between two or more of the plurality of frames.

A score for the region, based on the movement of the feature, is generated or updated at 610. In some implementations, the scores are based on or adjusted based on the amount of movement of the feature between two or more frames of the received plurality of frames. In some implementations, the adjustment of the scores is done by weighting existing scores for regions containing one or more features of the frame based on a determined amount of movement between a plurality of frames of the one or more features. In some implementations, the scores are assigned to the features instead of the regions containing the features. In some implementations, determining a score for each of the plurality of regions comprises determining a ranking of the plurality of regions with at least determining a top ranked region of the plurality of regions. In some implementations, determining a score for each of the plurality of regions comprises ranking each of the plurality of regions from highest to lowest, where the higher ranked regions are more likely to be included in any cropping of the frame of media.

### Use of Metadata

The conversion of media that includes detection of parts of the image or video (e.g., features) for each frame that are important and the intelligent cropping or padding to retain important features while discarding unimportant regions, static borders, etc. may be performed on different computing systems. In some implementations, the detection of parts of the image, video, or other media may be done on a server system and used to create metadata associating the areas or bounds containing features with the frames of the media. Based on the identified important areas, the image or video may be intelligently cropped or padded to retain important features while discarding unimportant regions, static borders, etc. on another device, such as a mobile device Features detected may include face tracking, object detection and/or recognition, text detection, detection of dominant colors, motion analysis, scene change detection, and image saliency. Detection and recognition can use methods and algorithms that are deep learning based. Text detection may use optical character recognition (OCR). Detection of features to place in the metadata allows for an optimal cropping path to be executed on the mobile device. Other aspects of the invention may include padding the image to match the background color and removing and/or reformatting any borders to fit the new display mode. Although the media primarily discussed in terms of video, in many implementations the systems may be applied to individual images or frames.

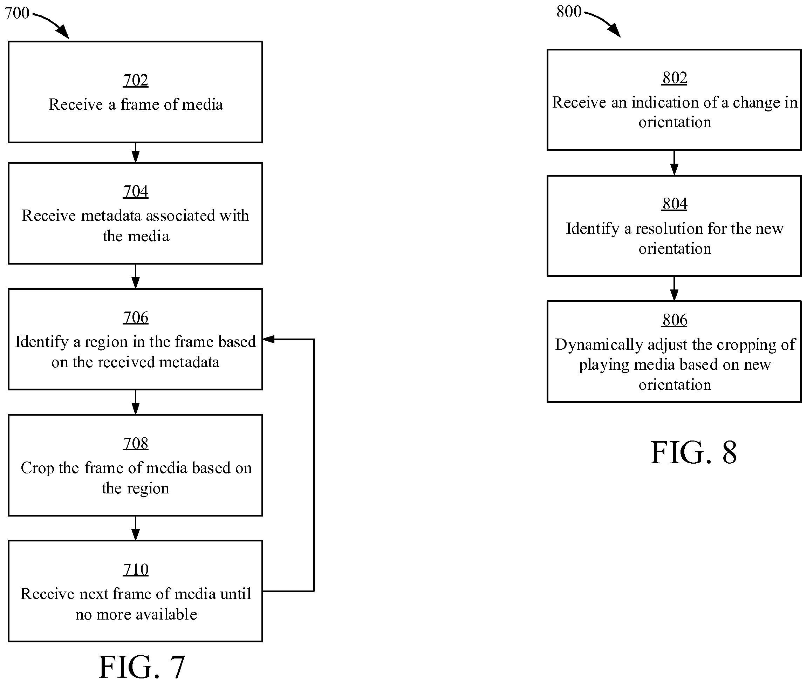

FIG. 7 is a flow diagram of an implementation of a method 700 of cropping a frame of media using received metadata. In some implementations, method 700 is implemented by a processor 122 of a mobile device 102 executing instructions stored on data storage 124. In brief, the method 700 comprises receiving a frame of media at 702, receiving metadata associated with the media at 704, identifying a region in the frame based on the received metadata at 706, cropping the frame of media based on the region at 708, and receiving the next frame of media at 710.

Still referring to FIG. 7 and in more detail, the method 700 begins when a frame of media is received at 702. In some implementations, the media is a media file containing a plurality of frames of media (e.g., a video file). The media may be received over a network interface 126 and stored in data storage 124. In some implementations, the frame of media is received as part of streaming media data. The streaming media may be received over the network interface 146.

The metadata associated with the media is received at 704. In some implementations, the metadata is received as part of the media file containing a plurality of frames of media. In some implementations, the metadata is received independently, along with an identifier or other data associating the metadata with the received plurality of frames of media. In some implementations, the metadata comprises data related to regions associated with one or more of the plurality of frames of media. In some implementations, bounding information of one or more regions for each of the plurality of frames of media is included in the metadata. In some implementations, locations within each of the plurality of frames of media of one or more features is contained in the metadata. Features may include objects such as automobiles, buildings, people, animals, street signs, and the like, text, borders of the frame of media, uniform color padding of one or more sides of the frame of media, etc. In some implementations, the metadata may identify a plurality of features and/or regions of one or more of the plurality of frames of media. In some implementations, the metadata is associated with a target aspect ratio or a target resolution. The metadata may, in some implementations, identify one or more regions of frames of the media. Each of the one or more identified regions may be regions determined to have a score that exceeds a threshold. The score may be determined by a cropping calculator as described above.

A region in the frame, based on the received metadata, is identified at 606. In some implementations, the region in the frame is retrieved from the metadata and comprises a feature identified through the use of facial recognition. In some implementations, the region in the frame is retrieved from the metadata and comprises a feature identified by analyzing the frame for text using optical character recognition. In some implementations, the region in the frame is retrieved from the metadata and comprises a feature identified by analyzing the frame for objects (e.g., automobiles, buildings, people, animals, street signs, and the like), using object recognition. In some implementations, the region in the frame is retrieved from the metadata and comprises a feature identified by analyzing the frame for borders, frames, and/or padding (e.g., a border of uniform or near uniform color at one or more edges of the frame). In some implementations, the region in the frame is retrieved from the metadata and comprises a plurality of features. The features may be of different types (e.g., faces, text, objects, etc.). In some implementations, a plurality of regions are retrieved from the metadata for the frame of media. In some implementations, a plurality of frames of media are received and the metadata is associated with the plurality of frames of media.

The frame of media is cropped at 708 based on the region. In some implementations, the frame of media is only cropped if one or more values of a target aspect ratio is smaller than the current values of the aspect ratio of the frame of media. In some implementations, the frame of media is only cropped if one or more values of a target resolution is smaller than the current values of the resolution of the frame of media. In some implementations, the frame of media is cropped to match a target aspect ratio or to match a target resolution. The target aspect ratio or target resolution may change depending on the orientation of a mobile device 102 displaying the frame of media. Additional padding may be added to one or more sides of the cropped frame of media to match the target aspect ratio or to match the target resolution. In some implementations, the cropped area is further based on one or more of frames of media preceding and/or following the frame of media.

The next frame of media is received at 710 until no more frames are available. The next frame of media may be received over a network interface 126 and stored in data storage 124. In some implementations, the next frame of media is received as part of streaming media data. The streaming media may be received over the network interface 146. As long as there are more frames available, the method may continue by again moving on to identify a region in the next frame based on the received metadata.

FIG. 8 is a flow diagram of an implementation of a method 800 of adjusting cropping based on a change in orientation. In some implementations, method 800 is implemented by a processor 122 of a mobile device 102 executing instructions stored on data storage 124 and receiving data from one or more sensor modules 132. In brief, the method 800 comprises receiving an indication of a change in orientation at 802, identifying a resolution for the new orientation at 804, and dynamically adjusting the cropping of playing media based on the new orientation at 806.

Still referring to FIG. 8 and in more detail, the method 800 begins when an indication of a change in orientation is received at 802. In some implementations, the indication of a change in orientation is received from a sensor module 132 (e.g., an accelerometer and/or magnetometer). In some implementations, the change in orientation or detection of orientation occurs prior to the display of media. In some implementations, the change in orientation occurs during the display of media, and a change to the display of media occurs in real time following the detection of the change in orientation.

A resolution and/or aspect ratio for the new orientation is identified at 804. In some implementations, the resolution and/or aspect ratio is predetermined by an application displaying the media. The resolution and/or aspect ratio may have predetermined values for both a landscape and portrait orientation. In some implementations, the resolution and/or aspect ratio depending on orientation, is determined to minimize the amount of unused display space. In some implementations, the resolution and/or aspect ratio depending on orientation, is determined to minimize the amount of padding needed to fit the displayed media in the available display space.

The cropping of playing media is dynamically adjusted at 806 based on the new orientation. In some implementations, the change in orientation occurs during the display of media, and a change to the display of media occurs in real time following the detection of the change in orientation. In some implementations, the frame of media or the plurality of frames of media remain the same, but the cropping is altered based on received metadata to fit in the new resolution and/or aspect ratio.

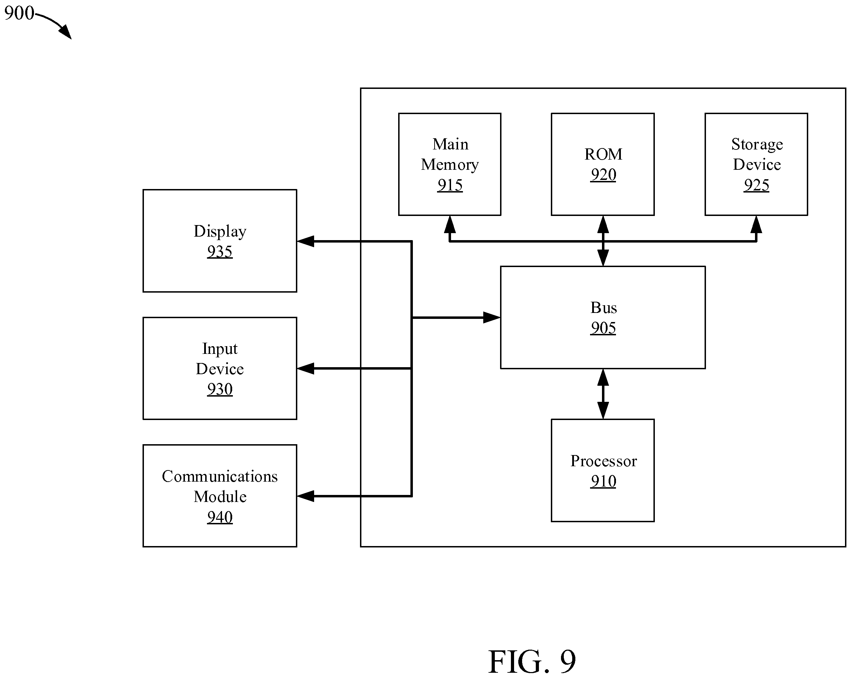

FIG. 9 is a block diagram of a general architecture for a computing system 900 that can be used to implement the mobile devices 102, media server systems 104, etc. The computing system 900 includes a bus 905 or other communication component for communicating information and a processor 910 coupled to the bus 905 for processing information. The computing system 900 can also include one or more processors 910 coupled to the bus for processing information. The computing system 900 also includes main memory 915, such as a RAM or other dynamic storage device, coupled to the bus 905 for storing information, and instructions to be executed by the processor 910. Main memory 915 can also be used for storing position information, temporary variables, or other intermediate information during execution of instructions by the processor 910. The computing system 900 may further include a ROM 920 or other static storage device coupled to the bus 905 for storing static information and instructions for the processor 910. A storage device 925, such as a solid state device, magnetic disk or optical disk, is coupled to the bus 905 for persistently storing information and instructions. Computing system 900 may include, but is not limited to, digital computers, such as laptops, desktops, workstations, personal digital assistants, servers, blade servers, mainframes, cellular telephones, smart phones, mobile computing devices (e.g., a notepad, e-reader, etc.) etc.

The computing system 900 may be coupled via the bus 905 to a display 935, such as a Liquid Crystal Display (LCD), Thin-Film-Transistor LCD (TFT), an Organic Light Emitting Diode (OLED) display, LED display, Electronic Paper display, Plasma Display Panel (PDP), and/or other display, etc., for displaying information to a user. An input device 930, such as a keyboard including alphanumeric and other keys, may be coupled to the bus 905 for communicating information and command selections to the processor 910. In another implementation, the input device 930 may be integrated with the display 935, such as in a touch screen display. The input device 930 can include a cursor control, such as a mouse, a trackball, or cursor direction keys, for communicating direction information and command selections to the processor 910 and for controlling cursor movement on the display 935.

According to various implementations, the processes and/or methods described herein can be implemented by the computing system 900 in response to the processor 910 executing an arrangement of instructions contained in main memory 915. Such instructions can be read into main memory 915 from another computer-readable medium, such as the storage device 925. Execution of the arrangement of instructions contained in main memory 915 causes the computing system 900 to perform the illustrative processes and/or method steps described herein. One or more processors in a multi-processing arrangement may also be employed to execute the instructions contained in main memory 915. In alternative implementations, hardwired circuitry may be used in place of or in combination with software instructions to effect illustrative implementations. Thus, implementations are not limited to any specific combination of hardware circuitry and software.

Although an implementation of a computing system 900 has been described in FIG. 9, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Implementations of the subject matter and the operations described in this specification can be implemented in digital electronic circuitry, or in computer software embodied on a tangible medium, firmware, or hardware, including the structures disclosed in this specification and their structural equivalents, or in combinations of one or more of them. The subject matter described in this specification can be implemented as one or more computer programs, i.e., one or more modules of computer program instructions, encoded on one or more computer storage media for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, or other storage devices). Accordingly, the computer storage medium is both tangible and nontransitory.

The operations described in this specification can be performed by a data processing apparatus on data stored on one or more computer-readable storage devices or received from other sources.

The terms "data processing apparatus," "computing device," or "processing circuit" encompass all kinds of apparatus, devices, and machines for processing data, including in some implementations a programmable processor, a computer, a system on a chip, or multiple ones, a portion of a programmed processor, or combinations of the foregoing. The apparatus can include special purpose logic circuitry, e.g., an FPGA or an ASIC. The apparatus can also include, in addition to hardware, code that creates an execution environment for the computer program in question, e.g., code that constitutes processor firmware, a protocol stack, a database management system, an operating system, a crossplatform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

Processors suitable for the execution of a computer program include, in some implementations, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including in some implementations semiconductor memory devices, e.g., EPROM, EEPROM, and flash memory devices; magnetic disks, e.g., internal hard disks or removable disks; magneto-optical disks; and CD-ROM and DVD disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD monitor, for displaying information to the user and a keyboard and a pointing device, e.g., a mouse or a trackball, by which the user can provide input to the computer. Other kinds of devices can be used to provide for interaction with a user as well; in some implementations, feedback provided to the user can be any form of sensory feedback, e.g., visual feedback, auditory feedback, or tactile feedback; and input from the user can be received in any form, including acoustic, speech, or tactile input.

While this specification contains many specific implementation details, these should not be construed as limitations on the scope of what may be claimed, but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated in a single software product or packaged into multiple software products embodied on tangible media.

References to "or" may be construed as inclusive so that any terms described using "or" may indicate any of a single, more than one, and all of the described terms.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
receiving, by a video preprocessor of a device, a first frame of a video in a first orientation;
identifying, by an image analyzer of the device, a first region within the first frame comprising a first feature;
generating a score, by a cropping calculator of the device, for the first region based on a characteristic of the first feature;
determining, by the cropping calculator, that the score for the first region exceeds a threshold;
identifying, by the image analyzer, a second region within the first frame comprising a second feature;
generating a second score, by the cropping calculator, for the second region;
determining, by the cropping calculator, that the second score exceeds the threshold;
identifying, by the image analyzer, a third region within the first frame comprising a third feature;
generating a third score, by the cropping calculator, for the third region; and
determining, by the cropping calculator, that the third score is less than the threshold;
responsive to the determination,
cropping the first frame of the video, by an image processor of the device, to include the first region within a predetermined display area comprising a subset of the first frame in a second orientation; wherein cropping the first frame further comprises:
identifying, by the image analyzer, a display region in the second orientation comprising the first region and the second region, responsive to the determination that the score for the first region and the second score for the second region each exceed the threshold; and
cropping the first frame, by the image processor, to the boundaries of the identified display region,
wherein identifying the display region in the second orientation comprising the first region and the second region comprises:
determining, by the cropping calculator, that the score for the first region is higher than the second score for the second region;
generating, by the image processor, an intermediate display region centered on the first feature in the second orientation having a predetermined size; and
adjusting, by the image processor, a position of the intermediate display region within the frame to include the first region and second region
while maintaining the predetermined size and second orientation; and further responsive to the determination,
determining, by the image processor, not to include the third region within the predetermined display area when cropping the first frame.

2. The method of claim 1, wherein the first feature comprises text, and wherein generating the score for the first region based on a characteristic of the first feature further comprises generating the score, by the cropping calculator, proportional to a size of the text.

3. The method of claim 1 or 2, wherein the first feature comprises text, and wherein generating the score for the first region based on a characteristic of the first feature further comprises generating the score, by the cropping calculator, inversely proportional to a distance of the text from a center of the frame.

4. The method of any preceding claim, wherein the first feature comprises a face, and wherein generating the score for the first region based on a characteristic of the first feature further comprises generating the score, by the cropping calculator, based on the size of the face relative to the frame.

5. The method of any preceding claim, further comprising:
receiving, by the video preprocessor, a second frame of the video in the first orientation;
identifying, by the image analyzer, a second position in the second frame for the first region comprising the first feature; and
generating a second score, by the cropping calculator, for the first region based on an amount of movement of the first region between the first frame and second frame; and
wherein determining that the score for the first region exceeds a threshold further comprises adding the score for the first region and the second score for the first region.

6. The method of claim 5, further comprising identifying, by a temporal image processor, a global motion vector from a difference in pixels of the first frame and pixels of the second frame; and
wherein generating the second score comprises generating a score, by the cropping calculator, proportional to a difference between the movement of the first region between the first frame and second frame and the global motion vector.

7. A system comprising:
one or more processors of a device;
a network interface electrically connected to the one or more processors; and
a computer storage device electrically connected to the one or more processors and storing instructions that, when executed by the one or more processors, cause the one or more processors to perform operations comprising a method according to any preceding claim.

## Patentansprüche

1. Verfahren, umfassend:
Empfangen, durch einen Video-Vorprozessor einer Vorrichtung, eines ersten Frames eines Videos in einer ersten Ausrichtung;
Identifizieren, durch einen Bildanalysator der Vorrichtung, eines ersten Bereichs innerhalb des ersten Frames, der ein erstes Merkmal umfasst;
Erzeugen einer Bewertung, durch einen Zuschneiderechner der Vorrichtung, für den ersten Bereich basierend auf einer Eigenschaft des ersten Merkmals;
Bestimmen, durch den Zuschneiderechner, dass die Bewertung für den ersten Bereich einen Schwellenwert überschreitet;
Identifizieren, durch den Bildanalysator, eines zweiten Bereichs innerhalb des ersten Frames, der ein zweites Merkmal umfasst;
Erzeugen einer zweiten Bewertung, durch den Zuschneiderechner, für den zweiten Bereich;
Bestimmen, durch den Zuschneiderechner, dass die zweite Bewertung den Schwellenwert überschreitet;
Identifizieren, durch den Bildanalysator, eines dritten Bereichs innerhalb des ersten Frames, der ein drittes Merkmal umfasst;
Erzeugen einer dritten Bewertung, durch den Zuschneiderechner, für den dritten Bereich; und
Bestimmen, durch den Zuschneiderechner, dass die dritte Bewertung weniger als der Schwellenwert ist;
als Reaktion auf die Bestimmung,
Zuschneiden des ersten Frames des Videos, durch einen Bildprozessor der Vorrichtung, um den ersten Bereich innerhalb einer vorbestimmten Anzeigefläche einzuschließen, die einen Teilsatz des ersten Frames in einer zweiten Ausrichtung umfasst; wobei das Zuschneiden des ersten Frames ferner Folgendes umfasst:
Identifizieren, durch den Bildanalysator, eines Anzeigebereichs in der zweiten Ausrichtung, der den ersten Bereich und den zweiten Bereich umfasst, als Reaktion auf die Bestimmung, dass die Bewertung für den ersten Bereich und die zweite Bewertung für den zweiten Bereich jeweils den Schwellenwert überschreiten; und
Zuschneiden des ersten Frames, durch den Bildprozessor, auf die Grenzen des identifizierten Anzeigebereichs,
wobei das Identifizieren des Anzeigebereichs in der zweiten Ausrichtung, die den ersten Bereich und den zweiten Bereich umfasst, Folgendes umfasst:
Bestimmen, durch den Zuschneiderechner, dass die Bewertung für den ersten Bereich höher ist als die zweite Bewertung für den zweiten Bereich;
Erzeugen, durch den Bildprozessor, eines Zwischenanzeigebereichs, der auf dem ersten Merkmal in der zweiten Ausrichtung zentriert ist und eine vorbestimmte Größe aufweist; und
Anpassen, durch den Bildprozessor, einer Position des Zwischenanzeigebereichs innerhalb des Frames, um den ersten Bereich und den zweiten Bereich einzuschließen, während die vorbestimmte Größe und zweite Ausrichtung beibehalten wird; und
ferner als Reaktion auf die Bestimmung,
Bestimmen, durch den Bildprozessor, den dritten Bereich nicht innerhalb der vorbestimmten Anzeigefläche einzuschließen, wenn der erste Frame zugeschnitten wird.

2. Verfahren nach Anspruch 1, wobei das erste Merkmal Text umfasst und wobei das Erzeugen der Bewertung für den ersten Bereich basierend auf einer Eigenschaft des ersten Merkmals ferner Erzeugen der Bewertung, durch den Zuschneiderechner, proportional zu einer Größe des Textes umfasst.

3. Verfahren nach Anspruch 1 oder 2, wobei das erste Merkmal Text umfasst und wobei das Erzeugen der Bewertung für den ersten Bereich basierend auf einer Eigenschaft des ersten Merkmals ferner Erzeugen der Bewertung, durch den Zuschneiderechner, umgekehrt proportional zu einem Abstand des Textes von einer Mitte des Frames umfasst.

4. Verfahren nach einem vorhergehenden Anspruch, wobei das erste Merkmal ein Gesicht umfasst und wobei das Erzeugen der Bewertung für den ersten Bereich basierend auf einer Eigenschaft des ersten Merkmals ferner Erzeugen der Bewertung, durch den Zuschneiderechner, basierend auf der Größe des Gesichts relativ zu dem Frame umfasst.

5. Verfahren nach einem vorhergehenden Anspruch, ferner umfassend:
Empfangen, durch den Video-Vorprozessor, eines zweiten Frames des Videos in der ersten Ausrichtung,
Identifizieren, durch den Bildanalysator, einer zweiten Position in dem zweiten Frame für den ersten Bereich, der das erste Merkmal umfasst; und
Erzeugen einer zweiten Bewertung, durch den Zuschneiderechner, für den ersten Bereich basierend auf einer Menge an Bewegung des ersten Bereichs zwischen dem ersten Frame und dem zweiten Frame; und
wobei das Bestimmen, dass die Bewertung für den ersten Bereich einen Schwellenwert überschreitet, ferner Addieren der Bewertung für den ersten Bereich und der zweiten Bewertung für den ersten Bereich umfasst.

6. Verfahren nach Anspruch 5, ferner umfassend Identifizieren, durch einen zeitlichen Bildprozessor, eines globalen Bewegungsvektors aus einer Differenz zwischen Pixeln des ersten Frames und Pixeln des zweiten Frames; und
wobei das Erzeugen der zweiten Bewertung Erzeugen einer Bewertung, durch den Zuschneiderechner, proportional zu einer Differenz zwischen der Bewegung des ersten Bereichs zwischen dem ersten Frame und dem zweiten Frame und dem globalen Bewegungsvektor umfasst.

7. System, umfassend:
einen oder mehrere Prozessoren einer Vorrichtung;
eine Netzwerkschnittstelle, die elektrisch mit dem einen oder den mehreren Prozessoren verbunden ist; und
eine Computerspeichervorrichtung, die elektrisch mit dem einen oder den mehreren Prozessoren verbunden ist und Anweisungen speichert, die, wenn sie durch den einen oder die mehreren Prozessoren ausgeführt werden, den einen oder die mehreren Prozessoren veranlassen, Operationen durchzuführen, die ein Verfahren nach einem vorhergehenden Anspruch umfassen.

## Revendications

1. Procédé, comprenant :
la réception, par un préprocesseur vidéo d'un dispositif, d'une première image d'une vidéo dans une première orientation ;
l'identification, par un analyseur d'image du dispositif, d'une première région à l'intérieur de la première image comprenant un premier élément ;
la génération d'un score, par un calculateur de détourage du dispositif, pour la première région sur la base d'une caractéristique du premier élément ;
la détermination, par le calculateur de détourage, que le score pour la première région dépasse un seuil ;
l'identification, par l'analyseur d'image, d'une deuxième région à l'intérieur de la première image comprenant un deuxième élément ;
la génération d'un deuxième score, par le calculateur de détourage, pour la deuxième région ;
la détermination, par le calculateur de détourage, que le deuxième score dépasse le seuil ;
l'identification, par l'analyseur d'image, d'une troisième région à l'intérieur de la première image comprenant un troisième élément ;
la génération d'un troisième score, par le calculateur de détourage, pour la troisième région ; et
la détermination, par le calculateur de détourage, que le troisième score est inférieur au seuil ;
sensible à la détermination,
le détourage de la première image de la vidéo, par un processeur d'image du dispositif, pour inclure la première région dans une zone d'affichage prédéterminée comprenant un sous-ensemble de la première image dans une seconde orientation ; dans lequel le détourage de la première image comprend en outre :
l'identification, par l'analyseur d'image, d'une région d'affichage dans la seconde orientation comprenant la première région et la deuxième région, en réponse à la détermination que le score pour la première région et le deuxième score pour la deuxième région dépassent chacun le seuil ; et
le détourage de la première image, par le processeur d'image, aux limites de la région d'affichage identifiée,
dans lequel l'identification de la région d'affichage dans la seconde orientation comprenant la première région et la deuxième région comprend :
la détermination, par le calculateur de détourage, que le score pour la première région est supérieur au deuxième score pour la deuxième région ;
la génération, par le processeur d'image, d'une région d'affichage intermédiaire centrée sur le premier élément dans la seconde orientation comportant une taille prédéterminée ; et
l'ajustement, par le processeur d'image, d'une position de la région d'affichage intermédiaire à l'intérieur de l'image pour inclure la première région et la deuxième région tout en maintenant la taille prédéterminée et la seconde orientation ; et
en outre en réponse à la détermination,
la détermination, par le processeur d'image, de ne pas inclure la troisième région dans la zone d'affichage prédéterminée lors du détourage de la première image.

2. Procédé selon la revendication 1, dans lequel le premier élément comprend du texte, et dans lequel la génération du score pour la première région sur la base d'une caractéristique du premier élément comprend en outre la génération du score, par le calculateur de détourage, proportionnel à une taille du texte.

3. Procédé selon la revendication 1 ou 2, dans lequel le premier élément comprend du texte, et dans lequel la génération du score pour la première région sur la base d'une caractéristique du premier élément comprend en outre la génération du score, par le calculateur de détourage, inversement proportionnel à une distance du texte à partir d'un centre de l'image.

4. Procédé selon l'une quelconque des revendications précédentes, dans lequel le premier élément comprend un visage, et dans lequel la génération du score pour la première région sur la base d'une caractéristique du premier élément comprend en outre la génération du score, par le calculateur de détourage, sur la base de la taille du visage par rapport à l'image.

5. Procédé selon l'une quelconque des revendications précédentes, comprenant en outre :
la réception, par le préprocesseur vidéo, d'une deuxième image de la vidéo dans la première orientation ;
l'identification, par l'analyseur d'image, d'une deuxième position dans la deuxième image pour la première région comprenant le premier élément ; et
la génération d'un deuxième score, par le calculateur de détourage, pour la première région sur la base d'une quantité de mouvement de la première région entre la première image et la deuxième image ; et
dans lequel la détermination que le score pour la première région dépasse un seuil comprend en outre l'addition du score pour la première région et du deuxième score pour la première région.

6. Procédé selon la revendication 5, comprenant en outre l'identification, par un processeur d'image temporelle, d'un vecteur de mouvement global à partir d'une différence des pixels de la première image et des pixels de la deuxième image ; et
dans lequel la génération du deuxième score comprend la génération d'un score, par le calculateur de détourage, proportionnel à une différence entre le mouvement de la première région entre la première image et la deuxième image et le vecteur de mouvement global.

7. Système comprenant :
un ou plusieurs processeurs d'un dispositif ;
une interface réseau connectée électriquement à l'un ou plusieurs processeurs ; et
un dispositif de stockage informatique connecté électriquement à l'un ou plusieurs processeurs et stockant des instructions qui, lorsqu'elles sont exécutées par l'un ou plusieurs processeurs, amènent l'un ou plusieurs processeurs à exécuter des opérations comprenant un procédé selon l'une quelconque des revendications précédentes.
